# EUROPÄISCHE PATENTANMELDUNG

(11) **EP 1 031 465 A2**
(43) Veröffentlichungstag der Anmeldung: **30.08.2000**
(21) Anmeldenummer: 00101619.5
(22) Anmeldetag: 28.01.2000
(51) Int. Cl.: B60R 7/05

(54) **Sonnenblende mit einem abnehmbar befestigten Etui, insbesondere einem Schminketui für ein Kraftfahrzeug**

(30) Priorität: 25.02.1999 DE 19908086
(71) Anmelder: Volkswagen Aktiengesellschaft, 38436 Wolfsburg (DE)
(72) Erfinder: Hofmann, Gustav, 38114 Braunschweig (DE); Bachorski, Tomasz, 59077 Hamm (DE); Stephan, Jörg, 38550 Isenbüttel (DE)

(57) **Zusammenfassung**

Die Erfindung betrifft eine Sonnenblende (1) mit einem abnehmbar befestigten Etui (2), insbesondere einem Schminketui für ein Kraftfahrzeug. Erfindungsgemäß ist das Etui (2) mit wenigstens einer betätigbaren Rastverbindung (5, 6, 7) mit dem Sonnenblendenkörper (1) verbunden. Dadurch ist eine Abnahme für eine Etuibenutzung einfach möglich, wobei die Gesamtanordnung zudem eine günstige Optik aufweist.

## Beschreibung

Die Erfindung betrifft eine Sonnenblende mit einem abnehmbar befestigten Etui, insbesondere einem Schminketui für ein Kraftfahrzeug nach dem Oberbegriff des Anspruchs 1.

Eine gattungsgemäße Sonnenblende mit einem abnehmbar befestigten Schminketui für ein Kraftfahrzeug ist aus der Schrift US-PS 5 318 053 bekannt. Das Schminketui ist an der Sonnenblende mit einer Saugnapf- und Clipbefestigung anbringbar. Das Schminketui ist ein separates Zubehörbauteil, bei dem der Befestigungsclip zur Anpassung an unterschiedliche Ausführungsformen von herkömmlichen Sonnenblendenkörpern einstellbar ist. Das Schminketui ist hier als relativ große Box mit einem Schiebedeckel und einem abklappbaren Deckelteil ausgebildet und vermittelt in Verbindung mit der wenig ansehnlichen Saugnapf- und Clipbefestigung keinen ansprechenden optischen Eindruck. Die Befestigung ist nur aufwendig lösbar, so daß das Schminketui im an der Sonnenblende montierten Zustand benutzt werden und nicht regelmäßig abgenommen werden soll. Eine Benutzung des Schminketuis im montierten Zustand ist jedoch problematisch, da beispielsweise durch herunterfallende Schminkutensilien oder Farb- und Puderreste die Verschmutzung der Kleidung einer Benutzerin möglich ist.

In einer ähnlichen, bekannten Ausführungsform nach der Schrift US-PS 5 329 947 ist ein taschenförmiges Schminketui mit seinem aufklappbaren Deckel über Haltebänder und Klettverschlüsse an einem Sonnenblendenkörper befestigbar. Für die Benutzung des Schminketuis wird das Etuiaufnahmefach gegenüber dem fest montierten Etuideckel nach unten abgeklappt, wobei jedoch der Deckel fest mit der Sonnenblende verbunden bleibt. Auch hier ist zwar grundsätzlich eine aufwendige Abnahme des Schminketuis von der Sonnenblende möglich, jedoch nicht für eine Benutzung des Schminketuis vorgesehen. Das Schminketui stellt auch hier ein wenig ansehnliches Zubehörteil dar, das in Verbindung mit der Klettbandbefestigung einen ungünstigen optischen Eindruck vermittelt.

Es ist zudem bekannt (EP 0 622 272 B1), in eine durchgehende Ausnehmung eines Sonnenblendenkörpers eine Kassette fest einzusetzen, deren eine Außenseite am Kassettenboden einen Spiegel aufweist und deren andere Außenseite den Kassettendeckel bildet. Der Kassettendeckel und damit das Kassettenfach ist im hochgeklappten Zustand der Sonnenblende zugänglich und der Spiegel auf der Gegenseite ist in der abgeklappten Sonnenblendenstellung benutzbar. Die Kassette ist zur Aufnahme von Schminkutensilien geeignet, kann jedoch nicht aus dem Sonnenblendenkörper ohne Werkzeug entfernt werden.

In einer ähnlichen Anordnung (US-PS 4 275 916) ist ein Kassettenteil in eine einseitige Ausnehmung eines Sonnenblendenkörpers einsetzbar und dort befestigbar. Das Kassettenteil weist einen aufklappbaren Deckel sowie Aufnahmefächer insbesondere für Schminkutensilien auf Zudem ist ein Spiegel vorgesehen. Es ist weiter eine entsprechende Anordnung mit zwei nebeneinanderliegenden Kassettenbereichen bekannt (JP 08258709), wobei in einem ersten Kassettenfach ein Make-up-Spiegel und daneben in einem zweiten Kassettenfach eine Kartenbox gehalten sind. Auch diese Kassetten sind nach ihrer Montage für einen Benutzer nicht von der Sonnenblende abnehmbar.

Aufgabe der Erfindung ist es, eine gattungsgemäße Sonnenblende mit einem abnehmbar befestigten Etui, insbesondere einem Schminketui für ein Kraftfahrzeug so weiterzubilden, daß eine Abnahme für eine Etuibenutzung einfach möglich ist und die Gesamtanordnung eine günstige Optik aufweist.

Diese Aufgabe wird mit den Merkmalen des Anspruchs 1 gelöst.

Gemäß Anspruch 1 ist das Etui mit wenigstens einer betätigbaren Rastverbindung mit dem Sonnenblendenkörper verbunden.

Durch eine solche betätigbare Rastverbindung ist eine einfache Abnehmbarkeit des Etuis, insbesondere eines Schminketuis vom Sonnenblendenkörper möglich, wodurch die Etuibenutzung und insbesondere die Benutzung darin enthaltener Schminkutensilien je nach den Gegebenheiten bequemer und vereinfacht ist. Nach der Etuibenutzung kann das geschlossene Etui schnell und einfach in die Rastverbindung eingerastet und am Sonnenblendenkörper verstaut werden.

Vorzugsweise ist die Rastverbindung durch wenigstens ein federvorgespanntes Rastelement gebildet, das am Schminketui und/oder am Sonnenblendenkörper angebracht ist und an einem Rastgegenelement angreift oder eingreift.

In einer besonders einfachen Ausgestaltung ist gegenüberliegend zu der wenigstens einen Rastverbindung zwischen dem Etui und dem Sonnenblendenkörper zusätzlich eine Einsteckverbindung vorgesehen, die bei eingerasteter Rastverbindung gesichert ist. Beispielsweise kann eine solche Einsteckverbindung durch kleine Fortsätze am Etui geschaffen sein, die in sonnenblendenseitige Ausnehmungen einführbar sind. Ebenso können für eine Einsteckverbindung Randbereiche des Etuis unter Hinterschneidungen des Sonnenblendenkörpers geschoben werden.

Eine besonders günstige Halterung für das geschlossene Etui ergibt sich durch ein Aufnahmefach im Sonnenblendenkörper, in dem das Etui so aufnehmbar ist, daß es flächenbündig mit der umgebenden Sonnenblendenfläche im Aufnahmefach einliegt. Damit wird einerseits eine feste, formschlüssige und klapperfreie Halterung erreicht, die einfach durch eine betätigbare Rastverbindung sicherbar ist. Zudem wird ein optisch ansprechender Eindruck mit bei einliegendem Etui durchgehender Sonnenblendenfläche erreicht.

Für eine weitere Verbesserung der Optik und Handhabung wird vorgeschlagen, daß das Aufnahmefach an der in der abgeklappten Benutzungsstellung der Sonnenblende dem Innenraum zugewandten Sonnenblendenseite angebracht wird.

Der Sonnenblendenkörper ist üblicherweise so groß, daß das Aufnahmefach für das Etui, insbesondere ein Schminketui nur einen Teilbereich der Sonnenblendenfläche einnimmt. Vorteilhaft wird dann neben dem Aufnahmefach für das Etui im Sonnenblendenkörper ein Make-up-Spiegel angeordnet. Das Aufnahmefach und der Make-up-Spiegel werden für eine stabile Konstruktion des Sonnenblendenkörpers und ein ansprechendes Aussehen vorteilhaft mit einem randseitig umlaufenden Rahmenbereich umgeben.

Anhand einer Zeichnung wird die Erfindung näher erläutert.

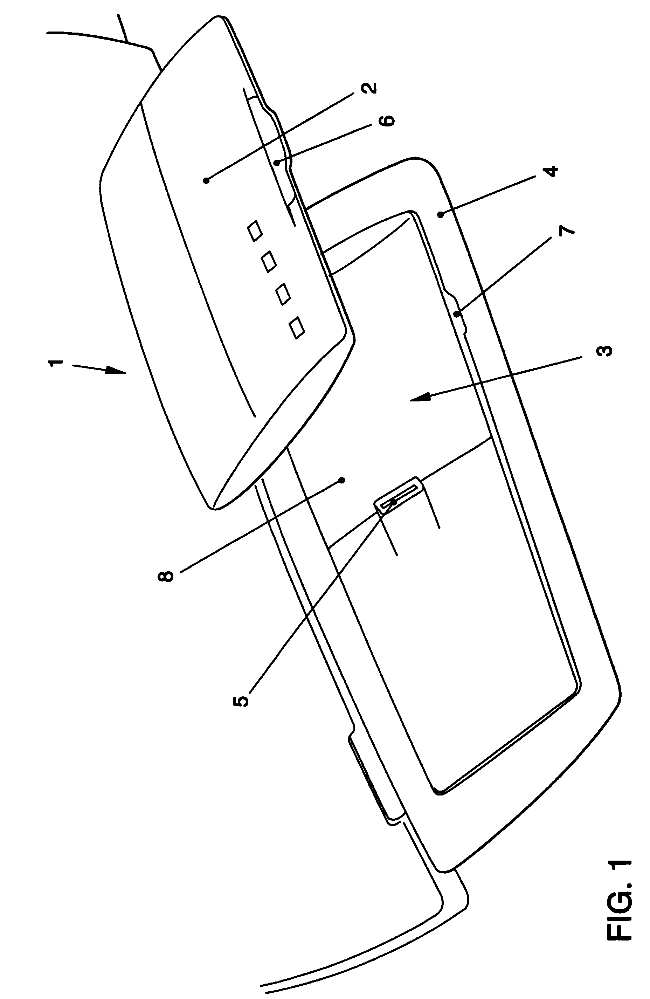

Die einzige Figur zeigt schematisch eine Sonnenblende 1 in einer Gebrauchsstellung, bei der ein Schminketui 2 aus der Sonnenblende 1 herausnehmbar ist.

Die Sonnenblende 1 weist ein Aufnahmefach 3 auf, das randseitig von einem Rahmenbereich 4 umgeben ist.

In dieses Aufnahmefach 3 ist das Schminketui 2 eingesetzt, was hier allerdings nicht dargestellt ist.

Um das Schminketui 2 sicher in dem Aufnahmefach 3 der Sonnenblende 1 zu halten, ist an der Sonnenblende 1 ein Rastelement 5 vorgesehen. Dieses Rastelement 5 übergreift das Schminketui im in das Aufnahmefach 3 eingesetzten Zustand.

Zusätzlich sind am Schminketui 2 ein Rastelement 6 und am Sonnenblendenkörper 1 ein entsprechend zugeordnetes Rastgegenelement 7 ausgebildet, wobei das Rastelement 6 und/oder das Rastgegenelement 7 ggf. federvorgespannt ist.

Im in der einzigen Figur gezeigten, herausgenommenen Zustand des Schminketuis 2 kann der Boden 8 des Aufnahmefachs 3 als Schminkspiegel ausgebildet sein.

### BEZUGSZEICHENLISTE

- 1: Sonnenblende
- 2: Schminketui
- 3: Aufnahmefach
- 4: Rahmenbereich
- 5: Rastelement
- 6: Rastelement
- 7: Rastgegenelement
- 8: Boden

## Patentansprüche

1. Sonnenblende mit einem abnehmbar befestigten Etui, insbesondere einem Schminketui für ein Kraftfahrzeug,
dadurch gekennzeichnet, daß
das Etui (2) mit wenigstens einer betätigbaren Rastverbindung (5, 6, 7) mit dem Sonnenblendenkörper (1) verbunden ist.

2. Sonnenblende nach Anspruch 1,
dadurch gekennzeichnet, daß
am Schminketui Rastelemente (6) und am Sonnenblendenkörper (1) zugeordnete Rastgegenelemente (7) angebracht sind und die Rastelemente (6) und/oder Rastgegenelemente (7) federvorgespannt sind.

3. Sonnenblende nach Anspruch 1 oder Anspruch 2,
dadurch gekennzeichnet, daß
gegenüberliegend zu der wenigstens einen Rastverbindung zwischen dem Etui (2) und dem Sonnenblendenkörper (1) eine Einsteckverbindung vorgesehen ist, die bei eingerasteter Rastverbindung gesichert ist.

4. Sonnenblende nach einem der Ansprüche 1 bis 3,
dadurch gekennzeichnet, daß
im Sonnenblendenkörper (1) ein Aufnahmefach (3) vorgesehen ist, in dem das Etui (2) so aufnehmbar ist, daß es flächenbündig mit der umgebenden Sonnenblendenfläche im Aufnahmefach (3) einliegt.

5. Sonnenblende nach Anspruch 4,
dadurch gekennzeichnet, daß
das Aufnahmefach (3) an der in der abgeklappten Benutzungsstellung der Sonnenblende dem Innenraum zugewandten Sonnenblendenseite angebracht ist.

6. Sonnenblende nach Anspruch 4 oder Anspruch 5,
dadurch gekennzeichnet, daß
das Aufnahmefach (3) gegebenenfalls mit einliegendem Etui (2) nur einen Teilbereich einer Sonnenblendenfläche einnimmt.

7. Sonnenblende nach Anspruch 6,
dadurch gekennzeichnet, daß
neben dem Aufnahmefach im Sonnenblendenkörper (1) ein Make-up-Spiegel angeordnet ist.

8. Sonnenblende nach Anspruch 7,
dadurch gekennzeichnet, daß
das Aufnahmefach (3) und der Make-up-Spiegel von einem an der Sonnenblende randseitig umlaufenden Rahmenbereich (4) umgeben sind.
